# NEUE EUROPÄISCHE PATENTSCHRIFT

(11) **EP 3 092 094 B2**
(45) Veröffentlichungstag und Bekanntmachung des Hinweises auf die Entscheidung über den Einspruch: **08.02.2023**
(45) Hinweis auf die Patenterteilung: 07.08.2019
(21) Anmeldenummer: 15700442.5
(22) Anmeldetag: 09.01.2015
(51) Int. Cl.: B22D 25/02, B22C 9/00, F03D 1/06

(54) **MEHRTEILIGE GUSSFORM, HERSTELLUNGSVERFAHREN, ROTORNABE UND WINDENERGIEANLAGE**
MULTI-PART CASTING MOULD, PRODUCTION METHOD, ROTOR HUB AND WIND TURBINE
MOULE EN PLUSIEURS PARTIES, PROCÉDÉ DE FABRICATION, MOYEU DE ROTOR ET ÉOLIENNE

(30) Priorität: 10.01.2014 DE 102014200276
(43) Veröffentlichungstag der Anmeldung: 16.11.2016
(73) Patentinhaber: Siemens Gamesa Renewable Energy Service GmbH, 20097 Hamburg (DE)
(72) Erfinder: TREDE, Alf, 25885 Immenstedt (DE); MEIERDIERKS, Sabine, 24768 Rendsburg (DE)
(74) Vertreter: Wallinger Ricker Schlotter Tostmann
(86) Internationale Anmeldenummer: PCT/EP2015/050326
(87) Internationale Veröffentlichungsnummer: WO 2015/104370

(56) Entgegenhaltungen:
- EP-A2- 1 930 584
- EP-A2- 1 930 584
- EP-A2- 2 653 719
- WO-A1-2012/130240
- US-A1- 2013 280 089
- Auszug aus dem Lehrbuch "Manufacturing Engineering and Technology? by Serope Kalpakjian and Steven R. Schmid, 4??Edition, Prentice-Hall, Inc., 2001
- Film: ?Metal Casting at Home Part 10" - "Another Day in my Foundry"(veröffentlicht auf YouTube 11.10.2009)
- Screenshot von YouTube dass das Veroffentlichungsdatum von D4 zeigt
- Declaration: Mr. Niels Skat Tiedje
- Herbert Werner and Werner Sonntag: ?Neue Dimensionen -Windenergie fordert die GieBereibranche?, Sonderdruck aus konstruieren+giessen, Band 30, Heft 2 (2005)

## Beschreibung

Die Erfindung betrifft eine mehrteilige Gussform für eine Rotornabe einer Windenergieanlage mit zwei oder mehr Rotorblattanschlüssen, umfassend einen oberen Formkasten, einen unteren Formkasten und einen Kern, wobei die Gussform im zusammengesetzten Zustand, in dem der obere Formkasten und der untere Formkasten in einer Teilungsebene aufeinander liegen und den Kern umschließen, einen Hohlraum eingrenzt, der die Form der herzustellenden Rotornabe aufweist, wobei eine zentrale Rotorachse in der Gussform vertikal und senkrecht zur Teilungsebene ausgerichtet ist, wobei jeder Rotorblattanschluss einen Blattflansch und eine innen im Rotorblattanschluss angeordnete Blattanschlussversteifung aufweist. Die Erfindung betrifft ferner ein Herstellungsverfahren, eine Rotornabe und eine Windenergieanlage.

Rotornaben moderner Windenergieanlagen mit zwei oder mehr Rotorblattanschlüssen werden üblicherweise in einem Gussverfahren hergestellt. Ein häufig verwendeter Werkstoff ist hierfür Gusseisen mit Kugelgraphit (GJS) oder Sphäroguss, der weniger spröde ist als ein Stahlguss. Da es sich bei Rotornaben um großvolumige Teile handelt, ist es wichtig, stabile, dünnwandige Rotornaben herzustellen. Außerdem soll die Herstellung kostengünstig erfolgen.

Da die Rotornaben sehr dünnwandig gegossen werden, werden zur Verstärkung von Rotornaben in den Blattanschlussbereichen Versteifungsmittel eingesetzt, beispielsweise Ringsteifen, die im Inneren eines Rotorblattanschlusses angeordnet sind und Verformungskräfte aufnehmen. Dies können beispielsweise ringförmige, sogenannte Ringsteifen sein. Diese Ringsteifen besitzen die gleiche Neigung wie der Blattanschluss, um die Verformungslasten optimal aufzunehmen und zu verteilen. Diese Art von Versteifungen wird von der Anmelderin beispielsweise bei den Anlagebaureihen MM82, MM92, MM100, 3.XM und 5/6M eingesetzt.

Bei zunehmender Anlagengröße muss auch die Rotornabe in ihren Dimensionen wachsen. Um dennoch eine wirtschaftliche Konstruktion darstellen zu können, kann die Wandstärke der Rotornabe nicht proportional mitwachsen, da dieses zu sehr hohen Gewichten führt. Hieraus ergeben sich außerdem fertigungstechnische Probleme, da das Schließen der Formkästen der Gussform durch die Abmessung des Kerns nicht oder nur schwer möglich ist. Auch wird es bei großvolumigen Rotornaben immer wichtiger, durch Vereinfachung des Fertigungsablaufes die durch das Größenwachstum bedingten spezifischen Kostenerhöhungen zu reduzieren.

Gemäß EP 1 930 584 A2 umfasst eine leichte kugelförmige Nabe einer Windenergieanlage mit horizontaler Achse eine Verstärkungsplatte, die mit der Nabenschale an der Umfangskante eines kreisförmigen Rotorblattanschlusses angeordnet ist. Sie ist an einer Seite außermittig angeordnet und umfasst eine außermittige Öffnung, die das Zentrum des runden Bereichs enthält. Durch eine ungleiche Anordnung der Verstärkungsplatte und der Öffnung an der Innenseite des kreisförmigen Flansches werden starke Ungleichgewichte aufgrund des Gießens der Nabe aufgehoben und eine ausgeglichene Festigkeit erreicht.

In EP 2 653 719 A2 ist eine Nabe für einen Rotor einer Windenergieanlage offenbart. Die Nabe umfasst einen Hohlkörper, der um eine Drehachse drehbar ist. Der Hohlkörper umfasst einen Rotorblattanschlussflansch und einen Flanschbereich, der von dem Rotorblattanschlussflansch umgeben ist. Die Nabe umfasst ferner einen Versteifungssteg, der sich innerhalb des Flanschbereichs erstreckt und eine Stegfläche bildet. Ein Seitenprofil der Stegebene erstreckt sich entlang der Drehachse der Nabe und ist in einem Kegelwinkel zu der Drehachse ausgerichtet.

Der vorliegenden Erfindung liegt daher die Aufgabe zugrunde, eine mehrteilige Gussform, ein Herstellungsverfahren, eine Rotornabe und eine Windenergieanlage mit einer entsprechenden Rotornabe zur Verfügung zu stellen, die bei wachsenden Dimensionen eine ausreichende Steifigkeit bei vergleichsweise geringem Gewicht und gleichzeitig guter, kostengünstiger Fertigungsmöglichkeit bieten.

Diese Aufgabe wird durch eine mehrteilige Gussform für eine Rotornabe einer Windenergieanlage mit zwei oder mehr Rotorblattanschlüssen gelöst, umfassend einen oberen Formkasten, einen untere Formkasten und einen Kern, wobei die Gussform im zusammengesetzten Zustand, in dem der obere Formkasten und der untere Formkasten in einer Teilungsebene aufeinander liegen und den Kern umschließen, einen Hohlraum eingrenzt, der die Form der herzustellenden Rotornabe aufweist, wobei eine zentrale Rotorachse in der Gussform vertikal, insbesondere senkrecht zur Teilungsebene, ausgerichtet ist, wobei jeder Rotorblattanschluss einen Blattflansch und eine innen im Rotorblattanschluss angeordnete Blattanschlussversteifung aufweist, wobei Abschlussebenen der Blattflansche jeweils unter einem ersten Winkel zu der zentralen Rotorachse stehen und von der Rotorachse unterhalb oder oberhalb der Teilungsebene durchstoßen werden, die dadurch weitergebildet ist, dass die Blattanschlussversteifungen Versteifungsebenen aufspannen, die unter einem vom ersten Winkel verschiedenen zweiten Winkel zur zentralen Rotorachse angeordnet sind, wobei die Versteifungsebenen der Blattanschlussversteifungen parallel zur zentralen Rotorachse ausgerichtet sind oder um einen geringen Winkelbetrag, der betragsmäßig kleiner ist als der erste Winkel, und um weniger als 1° bis 2° von der zentralen Rotorachseabweichen. Die Abschlussebene des Blattftensches ist im Rahmen der Erfindung die Ebene, auf der ein Rotorblatt mit seiner Wurzel angesetzt wird.

Die erfindungsgemäß aufgespannten Blattversteifungsebenen sind geometrisch definiert flach und leiten sich aus der Anordnung und Orientierung der Blattanschlussversteifung im Rotorblattanschluss ab. Die ersten und zweiten Winkel sind insbesondere als Polarwinkel in Bezug auf die zentrale Rotorachse zu verstehen. Der zweite Winkel schließt Winkel von 0° ein, so dass auch eine Parallelität zur zentralen Rotorachse umfasst ist. Der erste Winkel ist vorzugsweise betragsmäßig größer als 2°, insbesondere größer als 3°, insbesondere zwischen 3° und 6°. Im üblichen Fall, dass die zum Maschinenhaus weisende Seite der Rotornabe in der Gussform bei vertikaler Rotorachse zuoberst angeordnet ist, durchstößt die Rotorachse die Versteifungsebene vorzugsweise unterhalb der Teilungsebene. Dies bedeutet, dass ein Rotorblatt, das an den entsprechenden Blattanschluss angeschlossen wird, etwas in den Wind hinein steht bzw. u.a. von einem Turm der Windenergieanlage weg steht. Im Betrieb wird es vom anströmenden Wind wieder zurück gebogen. Fertigungstechnisch ist allerdings der umgekehrte Fall ebenfalls möglich, in dem die Rotorachse die Versteifungsebene oberhalb der Teilungsebene durchstößt.

Eine weitere geometrische Definition ergibt sich aus den Normalenvektoren auf die verschiedenen Ebenen, also die auf die Ebenen senkrecht stehenden Vektoren. Die Normalenvektoren auf die Abschlussebene eines Rotorblattanschlusses einerseits und auf die Versteifungsebene desselben Rotorblattanschlusses andererseits stehen ebenfalls unter einem Winkel zueinander, der gleich dem Differenzwinkel zwischen dem ersten Winkel und dem zweiten Winkel ist. Dieser Differenzwinkel ist erfindungsgemäß ungleich 0°, vorzugsweise größer als 2°, ferner vorzugsweise größer als 3°.

In Umfangsrichtung bzw. azimutaler Richtung sind die Rotorblattanschlüsse bei zweiblättrigen Rotoren um 180° versetzt, bei dreiblättrigen Rotoren um 120° usw. Die Positions- bzw. Winkelangaben beziehen sich ferner auf die Gussposition, in der die zentrale Rotorachse senkrecht zum Erdboden bzw. parallel zur Schwerkraftrichtung steht.

Mit der erfindungsgemäßen Auswahl zweier verschiedener Winkel bzw. Polarwinkel der Abschlussebenen der Blattflansche einerseits und der Versteifungsebenen andererseits zur zentralen Rotorachse wird es zum ersten Mal ermöglicht, den oberen Formkasten und den unteren Formkasten durch eine einfache vertikale Bewegung voneinander trennen zu können. Herkömmlich ist die Versteifungsebene parallel zur Abschlussebene der Blattflansche, d. h. mit einer deutlichen Neigung von etwa 3° bis 6°, ausgerichtet. Dies hat den weiteren Nachteil, dass der Kern, der bei der Entformung später zu zerstören ist, mindestens zweiteilig mit einer Teilung in der gleichen Teilungsebene hergestellt werden muss. Durch die Neigung der Versteifungsebene ist es bislang notwendig, den oberen Formkasten schräg über den Kern einzufädeln und auf dem unteren Formkasten schließlich abzusetzen. Die erfindungsgemäße Trennung der Ebenen des Blattflanschabschlusses und der Versteifungsebene ermöglicht es nunmehr, dieses Schrägauffädeln zu verlassen und ein einfaches vertikales Aufsetzen des oberen Formkastens auf den unteren Formkasten und den Kern zu ermöglichen. Dadurch wird das Herstellungsverfahren schneller und ökonomischer. Der Kern muss nicht mehr überhängend ausgeführt sein.

Bei einer erfindungsgemäßen Gussform sind die Versteifungsebenen der Blattanschlussversteifungen parallel zur zentralen Rotorachse ausgerichtet oder weichen um einen geringen Winkelbetrag, der betragsmäßig kleiner ist als der erste Winkel, und um weniger als 1° bis 2° von der zentralen Rotorachse ab. Die parallele Ausrichtung stellt eine besonders einfache Anordnung dar, die zweite Alternative erlaubt ebenfalls genügend Spiel und ein ausreichendes Überfädelmaß, so dass ebenfalls ein Auffädeln oder Überfädeln sehr einfach möglich ist. Normalenvektoren der Versteifungsebenen im Zentrum der jeweiligen Blattanschlussversteifungen bzw. des jeweiligen Rotorblattanschlusses verlaufen vorzugsweise durch die zentrale Rotorachse. Im Fall von flachen Blattanschlussversteifungen entsprechen die Normalenvektoren auf die jeweiligen Versteifungsebenen den Normalenvektoren auf die Blattanschlussversteifungen selbst. Flache Blattanschlussversteifungen sind vorteilhaft, weil sie eine besonders einfache Formgebung in der Gussform erlauben.

Eine weitere Erleichterung ergibt sich, wenn die Blattanschlussversteifungen konusförmig oder geknickt ausgebildet sind und in einer, insbesondere senkrecht zur zentralen Rotorachse angeordneten, Querschnittsebene einen Konuswinkel oder einen Knick aufweisen, der insbesondere einen Innenwinkel von 176° bis 179,5°, insbesondere etwa 179°, aufweist, wobei die Querschnittsebene durch die Teilungsebene der Gussform definiert ist und/oder durch die Zentren oder nahe der Zentren der wenigstens zwei Rotorblattanschlüsse verläuft, insbesondere weniger als ein Zehntel der Radien der Rotorblattanschlüsse von den Zentren der Rotorblattanschlüsse entfernt. Ein solcher Knick oder Konuswinkel erleichtert wesentlich die Herstellung des Kerns, indem er dessen zerstörungsfreie Entformung aus seinem Modell erleichtert. Ein solcher minimaler Knick oder Konuswinkel erleichtert zusätzlich auch das Überfädeln des oberen Formkastens über den Kern. Bei einer geknickten Blattanschlussversteifung ist die Blattanschlussversteifung in zwei gegeneinander leicht geneigte ebene Flächen aufgeteilt, die am Knick bzw. einer Knicklinie aufeinander stoßen. Diese Knicklinie liegt vorzugsweise in der Teilungsebene der Gussform. Im Falle einer konusförmigen Blattanschlussversteifung ist der Begriff Konuswinkel in diesem Zusammenhang der Innenwinkel des Konus und nicht zu verwechseln mit dem ebenfalls fachsprachlich gebräuchlichen "Konuswinkel" der Rotornabe, der dem ersten Winkel zwischen der Abschlussebene der Rotorblattanschlüsse und der Rotorachse entspricht.

Auch eine solche leicht geknickte oder konusförmige Versteifung spannt eine Versteifungsebene auf, die bspw. so definiert ist, dass die Versteifungsebene über die Fläche der Blattanschlussversteifung gesehen bzw. gemittelt den kleinsten mittleren Abstand zur Versteifung, also der Ringsteife o.ä., hat.

Dies lässt sich bei konusförmigen und geknickten Blattanschlussversteifungen auch noch über die Definition über Normalenvektoren genauer fassen. So ist im Falle konusförmiger, also kegelförmiger, Blattanschlussversteifungen mit runder oder ovaler Grundfläche eine Symmetrieachse des Konus auch ein Normalenvektor auf die zugehörige Versteifungsebene. Im Falle einer geknickten Blattanschlussversteifung ist der Normalenvektor parallel zur Winkelhalbierenden des Innenwinkels des Knicks und senkrecht zur Knicklinie bzw. ist eine Winkelhalbierende des Innenwinkels des Knicks, die senkrecht zu einer Knicklinie des Knicks ausgerichtet ist, ein Normalenvektor auf die zugehörige Versteifungsebene. Dies gilt insbesondere für den Fall, dass die Spitze des Konus bzw. der Knick im Zentrum bzw. durch das Zentrum des Blattanschlusses verläuft.

Weiterhin bedeutet die erfindungsgemäße Schrägstellung, dass eine Ansatzlinie der Blattanschlussversteifung am jeweiligen, im Wesentlichen zylinderförmigen, Blattflansch in Umfangsrichtung des Blattflansches einen aus dem Differenzwinkel zwischen ersten und zweiten Winkel resultierenden variablen Abstand zur Abschlussebene des jeweiligen Rotorblattanschlusses aufweist. Dabei ist vorzugsweise der Abstand am hintersten, zum Maschinenhaus weisenden, Punkt des Rotorblattanschlusses am größten und am vordersten, vom Maschinenhaus weg weisenden, Punkt am kleinsten. Dies ist äquivalent zu der Aussage, dass in Bezug auf die Gussform, bei der die Rotorachse vertikal und der Anschluss zum Triebstrang zuoberst angeordnet ist, die Abschlussebenen der Rotorblattanschlüsse jeweils unterhalb der Trennungsebene von der Rotorachse durchstoßen werden.

Die Ansatzlinie liegt im Falle flacher oder konusförmiger Blattanschlussversteifungen selbst in einer Ebene, während sie bei einer geknickten Blattanschlussversteifung wiederum in Umfangsrichtung leicht, entsprechend der Neigung der beiden Teilflächen, um eine Ebene, die zur Versteifungsebene parallel oder gleich der Versteifungsebene ist, variiert.

In Fällen, in denen der Knick oder die Spitze des Konus der Blattanschlussversteifung nicht im Zentrum des Blattanschlusses liegen, kann die Konusform bzw. die Knickform asymmetrisch angeordnet sein. In dem Fall sind die oben genannten Symmetrieachse bzw. Winkelhalbierende keine Normalenvektoren auf die Ebene die durch die Ansatzlinie aufgespannt wird. Die Versteifungsebene entspricht auch in diesem Fall der Ebene, die durch die Ansatzlinie aufgespannt wird.

Geometrisch ist die Querschnittsebene üblicherweise durch die Teilungsebene der Gussform definiert und/oder verläuft durch die, gegebenenfalls nahe bei den, Zentren der Rotorblattanschlüsse. Diese sind üblicherweise kreisförmig oder näherungsweise kreisförmig, wobei ihre Zentren in oder nahe der Teilungsebene liegen. Der Abstand der Querschnittsebene von den Zentren beträgt vorzugsweise nicht mehr als ein Zehntel, vorzugsweise weniger als ein Zwanzigstel, des Radius eines Rotorblattanschlusses.

Vorteilhafter Weise ist der Kern einteilig oder einstückig ausgebildet, insbesondere aus einem Gemisch aus Sand und Epoxidharz oder aus Sand und Furanharz. Dadurch ergibt sich eine sehr einfache Gussform, die außerdem Ausrichtungsprobleme der verschiedenen Teile auf einfache Weise beseitigt. Das Gemisch ist bei der Fertigung der Gussform an einem Modell noch formbar und wird in einem Gusskasten oder Formkasten verdichtet. Nach dem Abbinden des Epoxidharzes oder des Furanharzes wird die Form dann entformt und steht zum Guss zur Verfügung. Auch die obere Teilform und die untere Teilform sind vorzugsweise wenigstens teilweise aus einem Gemisch aus Sand und Epoxidharz oder aus Sand und Furanharz ausgebildet. Die Innenflächen der Teilformen und die Außenfläche des Kerns, die die Gusshohlräume eingrenzen, werden vorteilhafterweise mit einer Schlichte beschichtet, also einer Farbe, die für eine glatte Oberfläche der Form sorgt, um Sandeinschlüsse in der gegossenen Rotornabe zu vermeiden.

Vorteilhafterweise weisen die Blattanschlussversteifungen Mannlöcher auf, die insbesondere einen Durchmesser von wenigstens 60 cm aufweisen.

Für eine gute Versteifungswirkung sind die Blattanschlussversteifungen, bis gegebenenfalls auf ein Mannloch, flächig oder ringförmig ausgebildet, wobei die Blattanschlussversteifungen insbesondere an ihren Außenflächen eine Verrippung aufweisen, deren äußere Abschlussfläche insbesondere mit der Abschlussebene des jeweiligen Blattflansches fluchtet oder zusammenfällt. Die Verrippung nimmt den äußeren Teil des Hohlraums zwischen der Versteifungsebene bzw. Verstärkung und der Blattanschlussebene bzw. Abschlussebene des Blattflansches ein und wird so zu einer weiteren Stabilisierung und Versteifung genutzt.

Die der Erfindung zugrunde liegende Aufgabe wird auch durch ein Herstellungsverfahren für eine Rotornabe einer Windenergieanlage gelöst, wobei eine zuvor beschriebene erfindungsgemäße mehrteilige Gussform zusammengesetzt wird, wobei zunächst der Kern in die untere Teilform eingesetzt wird und anschließend die obere Teilform auf die untere Teilform aufgesetzt wird, wobei die obere Teilform auf der unteren Teilform auf der Teilungsebene flächig aufsitzt, ein Rotornabengussmaterial in den Hohlraum der Gussform eingefüllt wird und sich verfestigt, nach dem Verfestigen des Rotornabengussmaterials die Gussform entfernt wird, wobei der Kern, die obere Teilform und die untere Teilform jeweils wenigstens teilweise zerstört werden und die Rotornabe aus der unteren Teilform entnommen wird. Dieses Verfahren schließt somit ein, dass der Kern und die Teilformen bei der Entformung wenigstens teilweise zerstört werden.

Nach dem Guss kühlt die Rotornabe in ihrer Gussform etwa ein bis zwei Wochen lang ab, gegebenenfalls unter aktiver Kühlung mittels kühlmitteldurchströmten keramischen Kühlrohren, Filtern und Kühlelementen, die in die Komponenten der Gussform eingelassen sind. Wenn die Gussform auseinander genommen wird, um die Rotornabe zu entformen, zerbröselt das Sandgemisch der Teilformen und des Kerns zumindest in der unmittelbaren Umgebung der Rotornabe recht leicht.

Vorteilhafterweise wird zum Zusammensetzen der Gussform die obere Teilform senkrecht über den Kern abgesenkt und auf die untere Teilform aufgesetzt. Dies vereinfacht das Zusammensetzen der Gussform und vermindert die Gefahr von Beschädigungen der Teilformen und des Kerns vor dem Guss.

Vorzugsweise wird die Gussform vor dem Gießen in einem Gussrahmen eingespannt. Als Rotornabengussmaterial wird beispielsweise Sphäroguss verwendet.

Die der Erfindung zugrunde liegende Aufgabe wird ebenfalls durch eine Rotornabe einer Windenergieanlage mit zwei oder mehreren Rotorblattanschlüssen gelöst, insbesondere hergestellt oder herstellbar in einer zuvor beschriebenen erfindungsgemäßen Gussform und/oder in einem zuvor beschriebenen erfindungsgemäßen Herstellungsverfahren, wobei jeder Rotorblattanschluss einen Blattflansch und eine innen im Rotorblattanschluss angeordnete Blattanschlussversteifung aufweist, wobei Abschlussebenen der Blattflansche jeweils unter einem ersten Winkel zu einer zentralen Rotorachse stehen und von der Rotorachse unterhalb oder oberhalb der Teilungsebene durchstoßen werden, dadurch gekennzeichnet, dass die Blattanschlussversteifungen Versteifungsebenen aufspannen, die unter einem vom ersten Winkel verschiedenen zweiten Winkel zur zentralen Rotorachse angeordnet sind.

Dabei sind die Versteifungsebenen der Blattanschlussversteifungen bei einer erfindungsgemäßen Rotornabe parallel zur zentralen Rotorachse ausgerichtet oder um einen geringeren Winkelbetrag als der jeweilige Blattflansch und um weniger als 1° bis 2° zur oder gegen die zentrale Rotorachse geneigt.

Normalenvektoren auf die Versteifungsebene im Zentrum der jeweiligen Blattanschlussversteifungen verlaufen vorzugsweise durch die zentrale Rotorachse.

Vorzugsweise sind die Blattanschlussversteifungen, bis gegebenenfalls auf ein Mannloch, flächig oder ringförmig ausgebildet, wobei die Blattanschlussversteifungen insbesondere an ihren Außenflächen eine Verrippung aufweisen, deren äußere Abschlussfläche insbesondere mit der Abschlussebene des jeweiligen Blattflansches fluchtet oder zusammenfällt.

Ebenfalls vorteilhafterweise weisen die Blattanschlussversteifungen in einer von der Teilungsebene der Gussform definierten Querschnittsebene einen Konuswinkel oder einen Knick auf, der insbesondere einen Innenwinkel von 176° bis 179,5°, insbesondere etwa 179°, aufweist.

Zur erfindungsgemäßen Rotornabe gilt vorzugsweise, wie zur erfindungsgemäßen Gussform, dass der erste Winkel betragsmäßig größer als 2°, insbesondere größer als 3°, insbesondere zwischen 3° und 6°, ist und/oder ein Differenzwinkel zwischen dem ersten Winkel und dem zweiten Winkel größer als 2°, insbesondere größer als 3°, ist.

Ebenfalls ist es bevorzugt, dass bei flachen Blattanschlussversteifungen Normalenvektoren auf die jeweiligen Versteifungsebenen den Normalenvektoren auf die Blattanschlussversteifungen entsprechen oder bei konusförmigen Blattanschlussversteifungen eine Symmetrieachse des Konus auch ein Normalenvektor auf die zugehörige Versteifungsebene ist oder bei geknickten Blattanschlussversteifungen eine Winkelhalbierende des Innenwinkels des Knicks, die senkrecht zu einer Knicklinie des Knicks ausgerichtet ist, ein Normalenvektor auf die zugehörige Versteifungsebene ist.

Ebenfalls ist vorzugsweise vorgesehen, dass eine Ansatzlinie der Blattanschlussversteifung am jeweiligen, im Wesentlichen zylinderförmigen, Blattflansch in Umfangsrichtung des Blattflansches einen aus dem Differenzwinkel zwischen ersten und zweiten Winkel resultierenden variablen Abstand zur Abschlussebene des jeweiligen Rotorblattanschlusses aufweist, wobei insbesondere der Abstand am hintersten, zum Maschinenhaus weisenden, Punkt des Rotorblattanschlusses am größten und am vordersten, vom Maschinenhaus weg weisenden, Punkt am kleinsten ist.

Die der Erfindung zugrunde liegende Aufgabe wird auch durch eine Windenergieanlage mit einer erfindungsgemäßen zuvor beschriebenen Rotornabe gelöst.

Die zu den einzelnen Erfindungsgegenständen, also der mehrteiligen Gussform, dem Herstellungsverfahren, der Rotornabe und der Windenergieanlage genannten Merkmale, Eigenschaften und Vorteile gelten jeweils auch für die anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine mehrteilige Gussform nach dem Stand der Technik in einer Querschnittsdarstellung,
- Fig. 2: eine mehrteilige Gussform nach der Erfindung in einer Querschnittsdarstellung,
- Fig. 3: eine schematische Darstellung einer erfindungsgemäßen Rotornabe und
- Fig. 4: eine schematische perspektivische Darstellung der erfindungsgemäßen Rotornabe.

In den Zeichnungen sind jeweils gleiche oder gleichartige Elemente und/oder Teile mit denselben Bezugsziffern versehen, so dass von einer erneuten Vorstellung jeweils abgesehen wird.

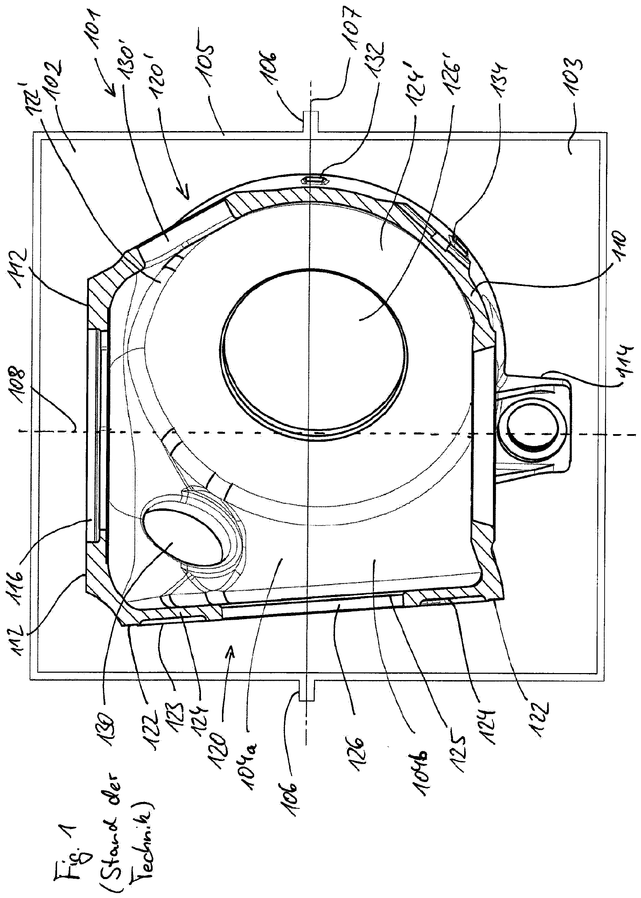

In Fig. 1 ist ein Querschnitt durch eine aus dem Stand der Technik bekannte mehrteilige Gussform für eine Rotornabe einer Windenergieanlage mit drei Rotorblattanschlüssen für drei Rotorblätter gezeigt. Die mehrteilige Gussform 101 umfasst einen oberen Formkasten 102, einen unteren Formkasten 103, die auf einer Teilungsebene 107 aneinander stoßen, sowie einen Kern, der in dem Hohlraum angeordnet ist, der durch die oberen und unteren Formkästen 102, 103 definiert ist. Die Formkästen 102, 103 und der Kern, der aus einem oberen Kernteil 104a und einem unteren Kernteil 104b besteht, sind aus einem Formwerkstoff, beispielsweise aus einem Sand-Epoxidharz- oder Sand-Furanharz-Gemisch hergestellt, das nach der Herstellung der Rotornabe zerstört wird.

Die Komponenten der Gussform, also die obere Teilform 102, die untere Teilform 103, werden in jeweils eigenen Gusskästen bzw. Gießkästen hergestellt. Dazu wird jeweils ein Modell, beispielsweise aus Schichtholz und/oder Kunststoff, in dem Sand-Harz-Gemisch abgeformt und nach dem Abbinden des Harzes wieder entnommen. Das Modell kann bei Hinterschneidungen mehrteilig sein bzw. Einlegeteile aufweisen, so dass das Herausnehmen des somit mehrteiligen Modells aus der abgebundenen Formmasse ohne Beschädigung der Form erfolgen kann. Der Kern wird in einer Kernform hergestellt.

Auch die obere Teilform 102 wird zunächst mit dem Hohlraum nach oben weisend hergestellt und für das Zusammensetzen der Gussform 101 umgedreht.

Die mehrteilige Gussform 101 definiert einen Hohlraum 110, der in der Fig. 1 bereits mit einem Gussmaterial gefüllt ist, diese Füllung ist durch eine Schraffierung kenntlich gemacht. Nicht schraffierte Gebiete sind nicht gefüllt. Die Darstellung der Fig. 1 ist insoweit schematisch, als auch nicht in der Schnittebene liegende Strukturen durch dünne Linien kenntlich gemacht sind. Ein Speiser- und Steigersystem der Gussform sowie Kühlrohre, Filter und Kühlelemente sind der Übersichtlichkeit halber weggelassen.

Der Hohlraum 110 der mehrteiligen Gussform 101 definiert eine Rotornabe mit drei Rotorblattanschlüssen, von denen zwei Rotorblattanschlüsse 120, 120' dargestellt sind. Ein Rotorblattanschluss 120 ist auf der linken Seite dargestellt. Ein um die zentrale Rotorachse 108 um 120° gedrehter Rotorblattanschluss 120' ist in einer perspektivischen Verkürzung sichtbar. Der Rotorblattanschluss 120 verfügt, wie auch die anderen beiden Rotorblattanschlüsse, die nicht in einem Querschnitt dargestellt sind, über einen Rotorblattflansch 122, der in einer Abschlussebene 123 liegt, die um typischerweise 3° bis 6°, gelegentlich auch mehr oder weniger, gegenüber der Rotorachse 108 geneigt ist.

In Fig. 1 und in der Gussform 101 oben ist ein Rotorwellenanschluss 112 in Form eines Flansches gezeigt, der eine Triebstrangöffnung 116 umschließt. Im unteren Formkasten 103 senkrecht nach unten ist der gondelabgewandte Teil der Rotornabe zu sehen mit der Darstellung einer Konsole 114 für einen Pitchantrieb, der außen zahnend mit einem nicht dargestellten Rotorblatt bzw. einer Rotorblattwurzel zusammenwirkt. Ebenfalls im Bereich der Konsole 114 ist ein Loch bzw. eine Öffnung dargestellt, durch die Wartungspersonal in die Rotornabe einsteigen kann. Weitere Einstiegslöcher 130, 130' sind im gondelnahen Bereich im oberen Formkasten 102 definiert und sind jeweils zwischen zwei Rotorblattanschlüssen 120, 120' angeordnet.

Jeder Rotorblattanschluss 120, 120' weist ferner eine als Ringsteife ausgebildete Blattanschlussversteifung 124, 124' auf, die in ihrem Zentrum einen Mannloch 126, 126' aufweist. Im Querschnitt auf der linken Seite ist zu erkennen, dass die Materialstärke der Blattanschlussversteifung 124 dünner ist als die im Blattflansch 122. Außerdem mündet nach innen hin die Blattanschlussversteifung 124, 124' in einer verstärkten ringförmigen Struktur, die das Mannloch 126 verstärkt.

Die Blattanschlussversteifung 124 liegt in einer Versteifungsebene 125, die gemäß Fig. 1 parallel ist zur Abschlussebene 123 des Blattflansches 122.

Weitere Strukturen, die in Fig. 1 erkennbar sind, sind beispielsweise Befestigungen 132, 134 für Anbauteile, beispielsweise eine Abdeckung, die auch Spinner genannt wird.

Wie aus Fig. 1 erkennbar, überragt das obere Kernteil 104a im Bereich des Blattflansches 122 den unteren Teil des oberen Formkastens 102 in der Nähe der Teilungsebene 107. Es ist daher nicht möglich, den oberen Formkasten 102 einfach vertikal von oben aufzusetzen oder nach Herstellung der Rotornabe vertikal nach oben abzuziehen, da es kein ausreichendes Überfädelmaß für eine vertikale Bewegung gibt. Daher muss auch der Kern 104a, 104b zweiteilig ausgeführt werden. Die entsprechende Herstellung der Rotornabe wird bei weiterer Vergrößerung der herzustellenden Objekte daher unökonomisch.

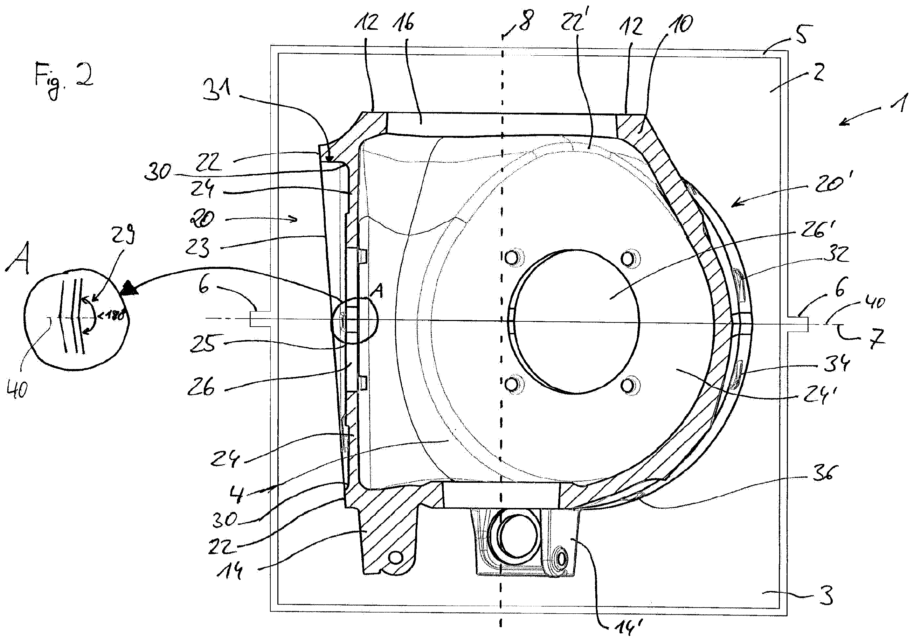

In Fig. 2 ist eine mehrteilige Gussform 1 nach der vorliegenden Erfindung gezeigt. Die Bezugszeichen sind gegenüber denjenigen aus Fig. 1 um 100 verringert. Das Speiser- und Steigersystem ist wiederum weggelassen.

Die mehrteilige Gussform 1 weist wiederum einen oberen Formkasten 2, einen unteren Formkasten 3 sowie einen Kern 4 auf, der allerdings nunmehr einstückig ist. Die Formkästen 2, 3 und der Kern 4 sind in einem Gussrahmen 5 eingefasst, der rundherum an Teilungsflansch 6 entlang einer Teilungsebene 7 zwischen dem oberen Formkasten 2 und dem unteren Formkasten 3 festgemacht wird. Ebenfalls eingezeichnet ist eine zentrale Rotorachse 8. Gegenüber dieser zentralen Rotorachse 8 weist der Hohlraum 10 für die Rotornabe eine dreizählige Symmetrie bzw. Rotationssymmetrie auf.

Eine alternativ mögliche Ausführungsform umfasst eine Fixierung der Formkästen 2, 3 mit Hilfe von Ballastierungsgewichten. Alternativ zur Fertigung in einem Gießkasten kann die Rotornabe auch in einer Grube gefertigt werden, in der die Formkästen 2, 3 mit Ballastierungen aufeinander fixiert werden.

Auch in Fig. 2 ist dargestellt, dass der Hohlraum 10 bereits mit einem Gussmaterial, beispielsweise Kugelgraphit, gefüllt ist. Die zentrale Rotorachse 8 ist vertikal gestellt, wobei der Rotorwellenanschluss 12 oben ist und der gondelabgewandte Teil der Rotornabe mit den Konsolen 14, 14', 14" für Pitchantriebe unten angeordnet ist.

Im linken Bereich ist ein Rotorblattanschluss 20 mit einem Blattflansch 22 und einer Blattanschlussversteifung 24 dargestellt. Der Blattflansch 22 ist in einer zur zentralen Rotorachse 8 geneigten Abschlussebene 23 angeordnet, so dass die Rotorblätter etwas von der Gondel weg ausgerichtet sind. Dieser Winkel beträgt etwa 3° bis 6°.

Im Unterschied zu der bekannten Gussform gemäß Fig. 1 ist gemäß Fig. 2 die Blattanschlussversteifung 24 in der Gussform 1 senkrecht in einer eigenen Versteifungsebene 25 angeordnet, die parallel zur zentralen Rotorachse 8 ist. Es ergibt sich durch diese Konfiguration ein Überfädelmaß derselben Dicke wie das schmalste Teil der Blattanschlussversteifung 24, etwa dort, wo die Bezugszeichen 24 in Fig. 2 hindeuten. Ebenfalls ist in Fig. 2 erkennbar, dass die Innenseite bzw. Innenwandung des Blattflansches 22 senkrecht auf die Blattanschlussversteifung 24 und nicht auf die Abschlussebene 23 steht, was eine fertigungstechnische Vereinfachung darstellt. Der Punkt bzw. Ansatzpunkt, an dem die Blattanschlussversteifung 24 an der Innenwandung des Blattflansches 22 ansetzt, liegt auf einer Ansatzlinie, die mit dem Bezugszeichen 30 bezeichnet ist. Diese Ansatzlinie 30 hat von der Abschlussebene 23 einen im Umfangsrichtung des Blattflansches 22 variierenden Abstand 31, der im oberen Bereich groß ist, im unteren Bereich sehr klein. Die Abstandsänderung resultiert aus dem Differenzwinkel zwischen der Abschlussebene 23 und der Versteifungsebene 25 bzw. der Ebene, die durch die Ansatzlinie 30 aufgespannt wird.

Das Gleiche gilt für die beiden anderen Rotorblattanschlüsse, von denen ein Rotorblattanschluss 20' perspektivisch verzeichnet eingezeichnet ist.

Auch die Blattanschlussversteifung 24 weist ein Mannloch 26 auf.

Ferner sind Befestigungen 32, 34, 36 für Anbauteile, beispielsweise einen Spinner, also eine Rotornabenabdeckung, gezeigt.

In einem mit "A" gezeigten vergrößerten Ausschnitt wird gezeigt, dass die Blattanschlussversteifung 24 einen Knick 29 in der Teilungsebene 7 aufweisen kann, die mit der Querschnittsebene 40 zusammenfällt, was das Auffädeln noch einmal erleichtert. Der Innenwinkel des Knicks ist kleiner als 180° und kann sich vorteilhaft zwischen 175° und 179,8°, insbesondere um 179° befinden. Der Ausschnitt "A" stellt ebenso einen Querschnitt durch eine konusförmige Blattanschlussversteifung im Bereich der Konusspitze dar.

Der Knick 29 bzw. die Konusspitze ist im Ausschnitt "A" in Fig. 2 nach außen ausgestellt dargestellt, d.h., von der Rotorachse 8 weg.

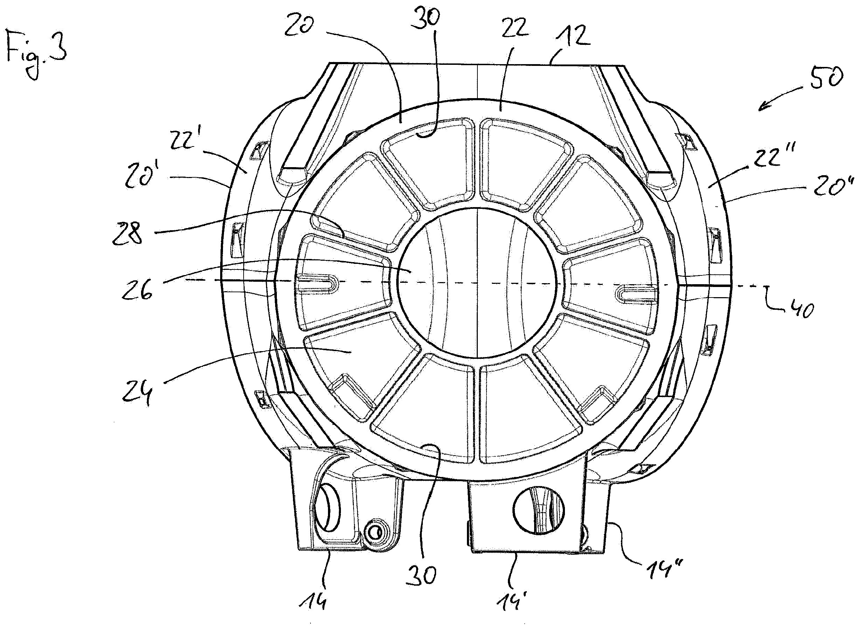

Fig. 3 zeigt ein Ausführungsbeispiel einer erfindungsgemäßen und erfindungsgemäß hergestellten Rotornabe 50. Zusätzlich zu der Darstellung der Fig. 2 ist in dieser Seitenansicht die Struktur einer Verrippung 28 mit einer zentralen Verstärkung des Mannlochs 26 gezeigt. Weitere gegossene Anschlusselemente bzw. Konsolen für beispielsweise Sensorik oder dergleichen sind ebenfalls im Bereich und auf der Blattanschlussversteifung 24 ohne Bezugszeichen dargestellt.

Die Verrippung 28 sorgt für eine weiter erhöhte Versteifung bei geringem Materialeinsatz.

Wie in Fig. 2 und 3 zu erkennen ist, verläuft die Querschnittsebene 40 durch die Zentren der Rotorblattanschlüsse 20, 20', 20".

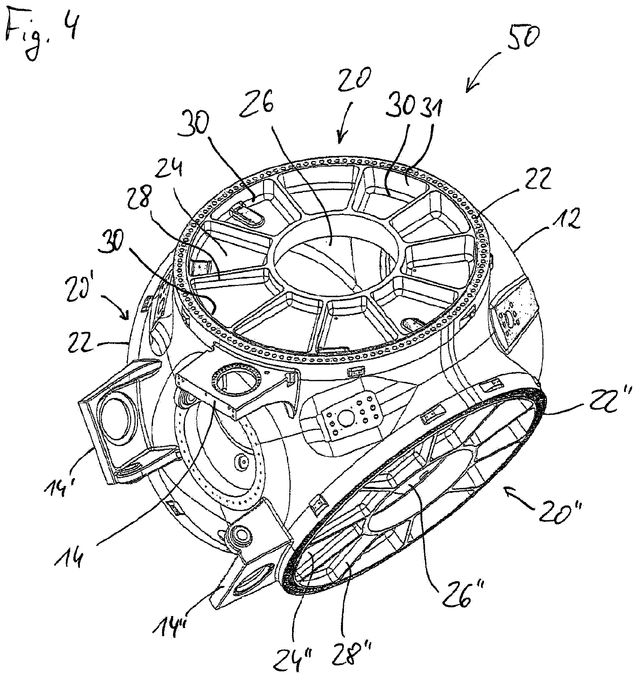

In Fig. 4 ist die erfindungsgemäße Rotornabe 50 aus Fig. 3 in einer perspektivischen Darstellung gezeigt. Im Vergleich zur Seitenansicht aus Fig. 3 ist in der perspektivischen Darstellung der Fig. 4 außerdem erkennbar, dass die Verrippung 28 mit ihrer Abschlussebene mit der Abschlussebene des Blattflansches 22 einhergeht, also die Rippen mit der Abschlussebene des Blattflansches 22 enden, während die Blattanschlussversteifung 24 unter einem anderen Winkel angeordnet ist. Dieses ist besonders gut daraus erkennbar, dass im montierten Zustand der Rotornabe an der Windenergieanlage die Rippen der Verrippung 28 zur Rotorwelle hin höher werden und zur von der Rotorwelle abgewandten Seite hin eine geringere Höhe aufweisen. Auf diese Weise wird der jeweilige Blattflansch bis zur Abschlussebene 23 des jeweiligen Blattflansches hin versteift. Ebenfalls ist erkennbar, dass der Abstand 31 an der Innenwandung des Blattflansches 22 von der Ansatzlinie 30 zur Abschlussebene 23 mit den Bolzenlöchern entsprechend der Verkippung der beiden Ebenen zueinander variiert.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 1: mehrteilige Gussform
- 2: oberer Formkasten
- 3: unterer Formkasten
- 4: Kern
- 5: Gussrahmen
- 6: Teilungsflansch
- 7: Teilungsebene
- 8: zentrale Rotorachse
- 10: Hohlraum für Rotornabenguss
- 12: Rotorwellenanschluss
- 14, 14', 14": Konsole für Pitchantrieb
- 16: Triebstrangöffnung
- 20, 20', 20": Rotorblattanschluss
- 22, 22', 22": Blattflansch
- 23: Abschlussebene des Blattflansches
- 24, 24', 24": Blattanschlussversteifung
- 25: Versteifungsebene
- 26, 26', 26": Mannloch
- 28, 28": Verrippung
- 29: Knick
- 30: Ansatzlinie
- 31: Abstand
- 32, 34, 36: Befestigung für Anbauteile
- 40: Rotornaben-Querschnittsebene
- 50: Rotornabe
- 101: mehrteilige Gussform
- 102: oberer Formkasten
- 103: unterer Formkasten
- 104a: oberes Kernteil
- 104b: unteres Kernteil
- 105: Gussrahmen
- 106: Teilungsflansch
- 107: Teilungsebene
- 108: zentrale Rotorachse
- 110: Hohlraum für Rotornabenguss
- 112: Rotorwellenanschluss
- 114: Konsole für Pitchantrieb
- 116: Triebstrangöffnung
- 120, 120': Rotorblattanschluss
- 122, 122': Blattflansch
- 123: Abschlussebene des Blattflansches
- 124, 124': Blattanschlussversteifung
- 125: Versteifungsebene
- 126, 126': Mannloch
- 130, 130': Einstiegsloch
- 132, 134: Befestigung für Anbauteile

## Patentansprüche

1. Mehrteilige Gussform (1) für eine Rotornabe (50) einer Windenergieanlage mit zwei oder mehr Rotorblattanschlüssen (20, 20', 20"),
umfassend einen oberen Formkasten (2), einen unteren Formkasten (3) und einen Kern (4), wobei die Gussform (1) im zusammengesetzten Zustand, in dem der obere Formkasten (2) und der untere Formkasten (3) in einer Teilungsebene (7) aufeinander liegen und den Kern (4) umschließen, einen Hohlraum (10) eingrenzt, der die Form der herzustellenden Rotornabe (50) aufweist,
wobei eine zentrale Rotorachse (8) in der Gussform (1) vertikal und senkrecht zur Teilungsebene (7) ausgerichtet ist,
wobei jeder Rotorblattanschluss (20, 20', 20") einen Blattflansch (22, 22', 22") und eine innen im Rotorblattanschluss (20, 20', 20") angeordnete Blattanschlussversteifung (24, 24', 24") aufweist,
wobei Abschlussebenen (23) der Blattflansche (22, 22', 22") jeweils unter einem ersten Winkel zu der zentralen Rotorachse (8) stehen und von der Rotorachse (8) unterhalb oder oberhalb der Teilungsebene (7) durchstoßen werden,
**dadurch gekennzeichnet, dass** die Blattanschlussversteifungen (24, 24', 24") Versteifungsebenen (25) aufspannen, die unter einem vom ersten Winkel verschiedenen zweiten Winkel zur zentralen Rotorachse (8) angeordnet sind, wobei die Versteifungsebenen (25) der Blattanschlussversteifungen (24, 24', 24") parallel zur zentralen Rotorachse (8) ausgerichtet sind oder um einen geringen Winkelbetrag, der betragsmäßig kleiner ist als der erste Winkel, und um weniger als 1° bis 2° von der zentralen Rotorachse abweichen.

2. Mehrteilige Gussform (1) nach Anspruch 1, **dadurch gekennzeichnet, dass** der erste Winkel betragsmäßig größer als 2°, insbesondere größer als 3°, insbesondere zwischen 3° und 6°, ist und/oder ein Differenzwinkel zwischen dem ersten Winkel und dem zweiten Winkel größer als 2°, insbesondere größer als 3°, ist.

3. Mehrteilige Gussform (1) nach einem der vorhergehenden Ansprüche, **dadurch gekennzeichnet, dass** die Blattanschlussversteifungen (24, 24', 24") flach, konusförmig oder geknickt ausgebildet sind, wobei konusförmige oder geknickte Blattanschlussversteifungen (24, 24', 24") in der Teilungsebene (7) der Gussform (1) einen Konuswinkel oder einen Knick (29) aufweisen, der insbesondere einen Innenwinkel von 176° bis 179,5°, insbesondere etwa 179°, aufweist.

4. Mehrteilige Gussform (1) nach Anspruch 2 oder 3, **dadurch gekennzeichnet, dass** bei flachen Blattanschlussversteifungen (24, 24', 24") Normalenvektoren auf die jeweiligen Versteifungsebenen (25) den Normalenvektoren auf die Blattanschlussversteifungen (24, 24', 24") entsprechen oder bei konusförmigen Blattanschlussversteifungen (24, 24', 24") eine Symmetrieachse des Konus auch ein Normalenvektor auf die zugehörige Versteifungsebene (25) ist oder bei geknickten Blattanschlussversteifungen (24, 24', 24") eine Winkelhalbierende des Innenwinkels des Knicks (29), die senkrecht zu einer Knicklinie des Knicks (29) ausgerichtet ist, ein Normalenvektor auf die zugehörige Versteifungsebene (25) ist.

5. Mehrteilige Gussform (1) nach einem der vorhergehenden Ansprüche, **dadurch gekennzeichnet, dass** eine Ansatzlinie (30) der Blattanschlussversteifung (24, 24', 24") am jeweiligen, im Wesentlichen zylinderförmigen, Blattflansch (22) in Umfangsrichtung des Blattflansches (22) einen aus dem Differenzwinkel zwischen ersten und zweiten Winkel resultierenden variablen Abstand (31) zur Abschlussebene (23) des jeweiligen Rotorblattanschlusses (20, 20', 20") aufweist, wobei insbesondere der Abstand (31) am hintersten, zum Maschinenhaus weisenden, Punkt des Rotorblattanschlusses (20, 20', 20") am größten und am vordersten, vom Maschinenhaus weg weisenden, Punkt am kleinsten ist.

6. Mehrteilige Gussform (1) nach einem der vorhergehenden Ansprüche, **dadurch gekennzeichnet, dass** der Kern (4) einteilig oder einstückig ausgebildet ist.

7. Mehrteilige Gussform (1) nach einem der vorhergehenden Ansprüche, **dadurch gekennzeichnet, dass** die Blattanschlussversteifungen (24, 24', 24"), bis gegebenenfalls auf ein Mannloch (26, 26', 26"), flächig oder ringförmig ausgebildet sind, wobei die Blattanschlussversteifungen (24, 24', 24") insbesondere an ihren Außenflächen eine Verrippung (28, 28") aufweisen, deren äußere Abschlussfläche insbesondere mit der Abschlussebene (23) des jeweiligen Blattflansches (22, 22', 22") fluchtet oder zusammenfällt.

8. Herstellungsverfahren für eine Rotornabe (50) einer Windenergieanlage, wobei eine mehrteilige Gussform (1) nach einem der vorhergehenden Ansprüche zusammengesetzt wird,
wobei zunächst der Kern (4) in die untere Teilform (3) eingesetzt wird und anschließend die obere Teilform (2) auf die untere Teilform (3) aufgesetzt wird,
wobei die obere Teilform (2) auf der unteren Teilform (3) auf der Teilungsebene (7) flächig aufsitzt,
ein Rotornabengussmaterial in den Hohlraum (10) der Gussform (1) eingefüllt wird und sich verfestigt,
nach dem Verfestigen des Rotornabengussmaterials die Gussform (1) entfernt wird, wobei der Kern (4), die obere Teilform (2) und die untere Teilform (3) jeweils wenigstens teilweise zerstört werden und die Rotornabe (50) aus der unteren Teilform (3) entnommen wird.

9. Herstellungsverfahren nach Anspruch 8, **dadurch gekennzeichnet, dass** zum Zusammensetzen der Gussform (1) die obere Teilform (2) senkrecht über den Kern (4) abgesenkt und auf die untere Teilform (3) aufgesetzt wird.

10. Rotornabe (50) einer Windenergieanlage mit zwei oder mehrere Rotorblattanschlüssen (20, 20', 20"),
insbesondere hergestellt oder herstellbar in einer Gussform (1) nach einem der Ansprüche 1 bis 7 und/oder
in einem Herstellungsverfahren nach Anspruch 8 oder 9,
wobei jeder Rotorblattanschluss (20, 20', 20") einen Blattflansch (22, 22', 22") und eine innen im Rotorblattanschluss (20, 20', 20") angeordnete Blattanschlussversteifung (24, 24', 24") aufweist,
wobei Abschlussebenen (23) der Blattflansche (22, 22', 22") jeweils unter einem ersten Winkel zu einer zentralen Rotorachse (8) stehen und von der Rotorachse (8) unterhalb oder oberhalb der Teilungsebene (7) durchstoßen werden,
**dadurch gekennzeichnet, dass** die Blattanschlussversteifungen (24, 24', 24") Versteifungsebenen (25) aufspannen, die unter einem vom ersten Winkel verschiedenen zweiten Winkel zur zentralen Rotorachse (8) angeordnet sind, wobei die Versteifungsebenen (25) der Blattanschlussversteifungen (24, 24', 24") parallel zur zentralen Rotorachse (8) ausgerichtet sind oder um einen geringeren Winkelbetrag als der jeweilige Blattflansch (22, 22', 22") und um weniger als 1° bis 2° zur oder gegen die zentrale Rotorachse (8) geneigt sind.

11. Rotornabe (50) nach Anspruch 10, **dadurch gekennzeichnet, dass** die Blattanschlussversteifungen (24, 24', 24"), bis gegebenenfalls auf ein Mannloch (26, 26', 26"), flächig oder ringförmig ausgebildet sind, wobei die Blattanschlussversteifungen (24, 24', 24") insbesondere an ihren Außenflächen eine Verrippung (28, 28") aufweisen, deren äußere Abschlussfläche insbesondere mit der Abschlussebene (23) des jeweiligen Blattflansches (22, 22', 22") fluchtet oder zusammenfällt.

12. Rotornabe (50) nach einem der Ansprüche 10 bis 11, **dadurch gekennzeichnet, dass** die Blattanschlussversteifungen (24, 24', 24") in einer, insbesondere senkrecht zur zentralen Rotorachse (8) angeordneten, Querschnittsebene (40) einen Konuswinkel oder einen Knick (29) aufweisen, der insbesondere einen Innenwinkel von 176° bis 179,5°, insbesondere etwa 179°, aufweist, wobei die Querschnittsebene (40) durch die Teilungsebene (7) der Gussform (1) definiert ist und/oder durch die Zentren oder nahe der Zentren der wenigstens zwei Rotorblattanschlüsse (20, 20', 20") verläuft, insbesondere weniger als ein Zehntel der Radien der Rotorblattanschlüsse (20, 20', 20") von den Zentren der Rotorblattanschlüsse (20, 20', 20") entfernt.

13. Windenergieanlage mit einer Rotornabe (50) nach einem der Ansprüche 10 bis 12.

## Claims

1. A multi-part casting mould (1) for a rotor hub (50) of a wind energy installation having two or more rotor blade connections (20, 20', 20"),
comprising an upper moulding box (2), a lower moulding box (3) and a core (4),
wherein, in the assembled state, in which the upper moulding box (2) and the lower moulding box (3) lie one on top of the other at a dividing plane (7) and surround the core (4), the casting mould (1) encloses a cavity (10) which has the shape of the rotor hub (50) to be manufactured,
wherein a central rotor axis (8) in the casting mould (1) is oriented vertically and perpendicularly with respect to the dividing plane (7),
wherein each rotor blade connection (20, 20', 20") has a blade flange (22, 22', 22") and a blade connection reinforcement (24, 24', 24") disposed in the interior of the rotor blade connection (20, 20', 20"),
wherein end planes (23) of the blade flanges (22, 22', 22") each form a first angle with respect to the central rotor axis (8) and are penetrated by the rotor axis (8) below or above the dividing plane (7),
**characterised in that** the blade connection reinforcements (24, 24', 24") define reinforcement planes (25) which are arranged at a second angle with respect to the central rotor axis (8) which is different from the first angle, wherein the reinforcement planes (25) of the blade connection reinforcements (24, 24', 24") are oriented parallel with respect to the central rotor axis (8) or deviate from the central rotor axis by a small angular amount, the absolute value of which is smaller than the first angle, and which is smaller than 1° to 2°.

2. The multi-part casting mould (1) according to claim 1, **characterised in that** the absolute value of the first angle is greater than 2°, in particular greater than 3°, in particular between 3° and 6°, and / or an angular difference between the first angle and the second angle is greater than 2°, in particular greater than 3°.

3. The multi-part casting mould (1) according to any one of the preceding claims, **characterised in that** the blade connection reinforcements (24, 24', 24") are constructed in a flat, conical or bent manner, wherein, in the dividing plane (7) of the casting mould (1), conical or bent blade connection reinforcements (24, 24', 24") have a cone angle or a bend (29), which in particular has an inner angle of 176° to 179.5°, in particular approximately 179°.

4. The multi-part casting mould (1) according to claim 2 or 3, **characterised in that**, in the case of flat blade connection reinforcements (24, 24', 24"), normal vectors on the respective reinforcement planes (25) correspond to the normal vectors on the blade connection reinforcements (24, 24', 24") or, in the case of conical blade connection reinforcements (24, 24', 24"), an axis of symmetry of the cone is also a normal vector on the associated reinforcement plane (25) or, in the case of bent blade connection reinforcements (24, 24', 24"), an angle bisector of the inner angle of the bend (29), which is oriented perpendicularly to a bending line of the bend (29), is a normal vector to the associated reinforcement plane (25).

5. The multi-part casting mould (1) according to any one of the preceding claims, **characterised in that** a base line (30) of the blade connection reinforcement (24, 24', 24"), at the respective, substantially cylindrical, blade flange (22), has, in the circumferential direction of the blade flange (22), a variable spacing (31) from the end plane (23) of the respective rotor blade connection (20, 20', 20"), which variable spacing (31) is the result of the difference angle between the first and the second angles, in particular wherein the spacing (31) is greatest at the rearmost point of the rotor blade connection (20, 20', 20") pointing towards the nacelle, and smallest at the foremost point pointing away from the nacelle.

6. The multi-part casting mould (1) according to any one of the preceding claims, **characterised in that** the core (4) is formed as one part or in one piece.

7. The multi-part casting mould (1) according to any one of the preceding claims, **characterised in that** the blade connection reinforcements (24, 24', 24"), with the possible exception of an access opening (26, 26', 26"), are constructed in a flat or in an annular manner, wherein the blade connection reinforcements (24, 24', 24"), in particular on their outer surfaces, comprise a rib structure (28, 28"), the outer end surface of which is in particular aligned, or coincides, with the end plane (23) of the respective blade flange (22, 22', 22").

8. A method of manufacture of a rotor hub (50) of a wind energy installation, wherein a multi-part casting mould (1) according to any one of the preceding claims is assembled,
wherein first the core (4) is inserted into the lower partial mould (3) and then the upper partial mould (2) is placed on the lower partial mould (3),
wherein the upper partial mould (2) is seated, in a plane-like manner, on the lower partial mould (3) on the dividing plane (7),
a rotor hub casting material is filled into the cavity (10) of the casting mould (1) and solidifies,
the casting mould (1) is removed after the solidification of the rotor hub casting material,
wherein the core (4), the upper partial mould (2) and the lower partial mould (3) are each at least partially destroyed, and the rotor hub (50) is removed from the lower partial mould (3).

9. The method of manufacture according to claim 8, **characterised in that**, in order to assemble the casting mould (1), the upper partial mould (2) is lowered perpendicularly over the core (4) and placed on the lower partial mould (3).

10. A rotor hub (50) of a wind energy installation having two or more rotor blade connections (20, 20', 20"),
which is in particular manufactured, or which can be manufactured, in a casting mould (1) according to any one of the claims 1 to 7 and / or
which is in particular manufactured, or which can be manufactured, by means of a method of manufacture according to claim 8 or 9,
wherein each rotor blade connection (20, 20', 20") comprises a blade flange (22, 22', 22") and a blade connection reinforcement (24, 24', 24") which is disposed in the interior of the rotor blade connection (20, 20', 20"),
wherein end planes (23) of the blade flanges (22, 22', 22") each form a first angle with respect to a central rotor axis (8) and are penetrated by the rotor axis (8) below or above the dividing plane (7),
**characterised in that** the blade connection reinforcements (24, 24', 24") define reinforcement planes (25) which are arranged at a second angle with respect to the central rotor axis (8) which is different from the first angle, wherein the reinforcement planes (25) of the blade connection reinforcements (24, 24', 24") are oriented parallel with respect to the central rotor axis (8) or are inclined with respect to, or towards, the central rotor axis (8) by a smaller angular amount than the respective blade flange (22, 22', 22") and by less than 1° to 2°.

11. The rotor hub (50) according to claim 10, **characterised in that** the blade connection reinforcements (24, 24', 24"), with the possible exception of an access opening (26, 26', 26"), are constructed in a plane-like or in an annular manner, wherein the blade connection reinforcements (24, 24', 24"), in particular on their outer surfaces, comprise a rib structure (28, 28"), the outer end surface of which is in particular aligned, or coincides, with the end plane (23) of the respective blade flange (22, 22', 22").

12. The rotor hub (50) according to any one of the claims 10 to 11, **characterised in that**, in a cross-sectional plane (40), in particular in a cross-sectional plane (40) which is arranged perpendicular with respect to the central rotor axis (8), the blade connection reinforcements (24, 24', 24") have a cone angle or a bend (29), which in particular has an inner angle of 176° to 179.5°, in particular approximately 179°, wherein the cross-sectional plane (40) is defined by the dividing plane (7) of the casting mould (1) and / or passes through the centres or near the centres of the at least two rotor blade connections (20, 20', 20"), in particular at a distance of less than one tenth of the radii of the rotor blade connections (20, 20', 20") from the centres of the rotor blade connections (20, 20', 20").

13. A wind energy installation comprising a rotor hub (50) according to any one of the claims 10 to 12.

## Revendications

1. Moule (1) en plusieurs parties pour un moyeu de rotor (50) d'une éolienne avec deux raccords de pale de rotor (20, 20', 20") ou plus,
comprenant un châssis de moulage supérieur (2), un châssis de moulage inférieur (3) et une partie centrale (4), dans lequel le moule (1) délimite, dans l'état assemblé, dans lequel le châssis de moulage supérieur (2) et le châssis de moulage inférieur (3) reposent l'un sur l'autre dans un plan de séparation (7) et entourent la partie centrale (4), une cavité (10), qui présente la forme du moyeu de rotor (50) à fabriquer,
dans lequel un axe de rotor (8) central est orienté dans le moule (1) de manière verticale et de manière perpendiculaire par rapport au plan de séparation (7),
dans lequel chaque raccord de pale de rotor (20, 20', 20") présente un flasque de pale (22, 22', 22") et un renfort de raccord de pale (24, 24', 24") disposé à l'intérieur dans le raccord de pale de rotor (20, 20', 20"),
dans lequel des plans terminaux (23) du flasque de pale (22, 22', 22") se situent respectivement selon un premier angle par rapport à l'axe de rotor (8) central et sont traversés par l'axe de rotor (8) au-dessous ou au-dessus du plan de division (7),
**caractérisé en ce que** les renforts de raccord de pale (24, 24', 24'') décrivent des plans de renfort (25), qui sont disposés par rapport à l'axe de rotor (8) central selon un deuxième angle différent du premier angle, dans lequel les plans de renfort (25) des renforts de raccord de pale (24, 24', 24") sont orientés de manière parallèle par rapport à l'axe de rotor (8) central ou s'écartent de l'axe de rotor central d'une valeur d'angle inférieure, qui est inférieure en termes de valeur au premier angle et qui est de moins de 1° à 2°.

2. Moule (1) en plusieurs parties selon la revendication 1, **caractérisé en ce que** le premier angle est en termes de valeur supérieur à 2°, en particulier supérieur à 3°, en particulier est compris entre 3° et 6°, et/ou un angle différentiel entre le premier angle et le deuxième angle est supérieur à 2°, en particulier supérieur à 3°.

3. Moule (1) en plusieurs parties selon l'une quelconque des revendications précédentes, **caractérisé en ce que** les renforts de raccord de pale (24, 24', 24'') sont réalisés de manière plate, en forme de cône ou de manière pliée, dans lequel des renforts de raccord de pale (24, 24', 24'') de forme conique ou pliés présentent dans le plan de division (7) du moule (1) un angle de cône ou une pliure (29), qui présente en particulier un angle intérieur allant de 176° à 179,5°, en particulier d'environ 179°.

4. Moule (1) en plusieurs parties selon la revendication 2 ou 3, **caractérisé en ce que** dans le cas de renforts de raccord de pale (24, 24', 24'') plats, des vecteurs normaux sur les plans de renfort (25) respectifs correspondent aux vecteurs normaux sur les renforts de raccord de pale (24, 24', 24") ou dans le cas de renforts de raccord de pale (24, 24', 24") en forme de cône, un axe de symétrie du cône est également un vecteur normal sur le plan de renfort (25) associé ou dans le cas de renforts de raccord de pale (24, 24', 24'') pliés, une bissectrice de l'angle intérieur de la pliure (29), qui est orientée de manière perpendiculaire par rapport à une ligne de pliage de la pliure (29), est un vecteur normal sur le plan de renfort (25) associé.

5. Moule (1) en plusieurs parties selon l'une quelconque des revendications précédentes, **caractérisé en ce qu'**une ligne de démarcation (30) du renfort de raccord de pale (24, 24', 24") présente au niveau du flasque de pale (22) respectif sensiblement en forme de cylindre, dans la direction périphérique du flasque de pale (22), une distance (31) variable résultant de l'angle différentiel entre le premier et le deuxième angle par rapport au plan terminal (23) du raccord de pale de rotor (20, 20', 20") respectif, dans lequel en particulier la distance (31) est sur le point le plus à l'arrière, pointant vers le bâti de machine, du raccord de pale de rotor (20, 20', 20'') la plus grande et, sur le point le plus en avant, pointant en s'éloignant du bâti de machine, la plus petite.

6. Moule (1) en plusieurs parties selon l'une quelconque des revendications précédentes, **caractérisé en ce que** la partie centrale (4) est réalisée en une partie ou d'un seul tenant.

7. Moule (1) en plusieurs parties selon l'une quelconque des revendications précédentes, **caractérisé en ce que** les renforts de raccord de pale (24, 24', 24''), sauf éventuellement un trou d'homme (26, 26', 26''), sont réalisés à plat ou de manière à présenter une forme annulaire, dans lequel les renforts de raccord de pale (24, 24', 24") présentent en particulier au niveau de leurs surfaces extérieures un nervurage (28, 28''), dont la surface terminale extérieure est en affleurement ou coïncide en particulier avec le plan terminal (23) du flasque de pale (22, 22', 22") respectif.

8. Procédé de fabrication pour un moyeu de rotor (50) d'une éolienne, dans lequel un moule (1) en plusieurs parties selon l'une quelconque des revendications précédentes est assemblé, dans lequel tout d'abord la partie centrale (4) est insérée dans le moule partiel inférieur (3) puis le moule partiel supérieur (2) est placé sur le moule partiel inférieur (3), dans lequel le moule partiel supérieur (2) repose à plat sur le moule partiel inférieur (3) sur le plan de division (7),
un matériau de moulage de moyeu de rotor est transvasé dans la cavité (10) du moule (1) et se solidifie,
le moule (1) est enlevé après la solidification du matériau de moulage de moyeu de rotor,
dans lequel la partie centrale (4), le moule partiel supérieur (2) et le moule partiel inférieur (3) sont détruits respectivement au moins en partie et le moyeu de rotor (50) est retiré du moule partiel inférieur (3).

9. Procédé de fabrication selon la revendication 8, **caractérisé en ce que** pour assembler le moule (1), le moule partiel supérieur (2) est abaissé de manière perpendiculaire par-dessus la partie centrale (4) et est placé sur le moule partiel inférieur (3).

10. Moyeu de rotor (50) d'une éolienne avec deux raccords de pale de rotor (20, 20', 20") ou plus,
en particulier fabriqué ou pouvant être fabriqué dans un moule (1) selon l'une quelconque des revendications 1 à 7 et/ou en particulier fabriqué ou pouvant être fabriqué lors d'un procédé de fabrication selon la revendication 8 ou 9,
dans lequel chaque raccord de pale de rotor (20, 20', 20") présente un flasque de pale (22, 22', 22'') et un renfort de raccord de pale (24, 24', 24'') disposé à l'intérieur dans le raccord de pale de rotor (20, 20', 20"),
dans lequel des plans terminaux (23) du flasque de pale (22, 22', 22") se situent respectivement selon un premier angle par rapport à un axe de rotor (8) central et sont traversés par l'axe de rotor (8) au-dessous ou au-dessus du plan de division (7),
**caractérisé en ce que** les renforts de raccord de pale (24, 24', 24'') décrivent des plans de renfort (25), qui sont disposés par rapport à l'axe de rotor (8) central selon un deuxième angle différent du premier angle, dans lequel les plans de renfort (25) des renforts de raccord de pale (24, 24', 24'') sont orientés de manière parallèle par rapport à l'axe de rotor (8) central ou sont inclinés d'une valeur d'angle inférieure à celle du flasque de pale (22, 22', 22'') respectif par rapport à l'axe de rotor (8) central ou à l'encontre de l'axe de rotor (8) central, et de moins de 1° à 2°.

11. Moyeu de rotor (50) selon la revendication 10, **caractérisé en ce que** les renforts de raccord de pale (24, 24', 24"), sauf éventuellement un trou d'homme (26, 26', 26"), sont réalisés de manière plate ou de manière à présenter une forme annulaire, dans lequel les renforts de raccord de pale (24, 24', 24'') présentent en particulier au niveau de leurs surfaces extérieures un nervurage (28, 28''), dont la surface terminale extérieure est en affleurement ou coïncide en particulier avec le plan terminal (23) du flasque de pale (22, 22', 22'') respectif.

12. Moyeu de rotor (50) selon l'une quelconque des revendications 10 à 11, **caractérisé en ce que** les renforts de raccord de pale (24, 24', 24'') présentent dans un plan de section transversale (40) disposé en particulier de manière perpendiculaire par rapport à l'axe de rotor (8) central un angle de cône ou une pliure (29), qui présente en particulier un angle intérieur allant de 176° à 179,5°, en particulier d'environ 179°, dans lequel le plan de section transversale (40) est défini par le plan de division (7) du moule (1) et/ou s'étend à travers les centres ou à proximité des centres des au moins deux raccords de pale de rotor (20, 20', 20"), en particulier de manière éloignée de moins d'un dixième des rayons des raccords de pale de rotor (20, 20', 20") des centres des raccords de pale de rotor (20, 20', 20").

13. Eolienne avec un moyeu de rotor (50) selon l'une quelconque des revendications 10 à 12.
